(19) Europäisches Patentamt
European Patent Office
Office européen des brevets

(11) **EP 1 809 956 B1**

(12) **FASCICULE DE BREVET EUROPEEN**

(45) Date de publication et mention de la délivrance du brevet:
**10.08.2016 Bulletin 2016/32**

(51) Int Cl.:
***F25B 17/08*** *(2006.01)*

(21) Numéro de dépôt: **05815190.3**

(22) Date de dépôt: **03.11.2005**

(86) Numéro de dépôt international:
**PCT/FR2005/002731**

(87) Numéro de publication internationale:
**WO 2006/048552 (11.05.2006 Gazette 2006/19)**

(54) **PRODUCTION DE FROID À TRÈS BASSE TEMPÉRATURE DANS UN DISPOSITIF THERMOCHIMIQUE**

ERZEUGUNG VON TIEFKÜHLUNG IN EINER THERMOCHEMISCHEN VORRICHTUNG

PRODUCTION OF VERY LOW-TEMPERATURE REFRIGERATION IN A THERMOCHEMICAL DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2004 FR 0411767**

(43) Date de publication de la demande:
**25.07.2007 Bulletin 2007/30**

(73) Titulaires:
• **TECHN'ICE**
  **65130 Capvern les Bains (FR)**
• **Centre National de la Recherche Scientifique**
  **75016 Paris (FR)**

(72) Inventeurs:
• **STITOU, Driss**
  **F-66570 ST NAZAIRE (FR)**
• **MAZET, Nathalie**
  **F-66100 PERPIGNAN (FR)**
• **LE PIERRES, Nolwenn Rozenn**
  **F-01300 Nattages (FR)**

(74) Mandataire: **Goulard, Sophie et al**
  **Ipsilon**
  **Le Centralis**
  **63 Avenue du Général Leclerc**
  **92340 Bourg-la-Reine (FR)**

(56) Documents cités:
**EP-A- 0 388 132      WO-A-2004/011860**
**JP-A- 56 146 971     JP-A- 61 134 551**
**US-A- 4 623 018      US-A- 5 057 132**
**US-A- 5 351 493      US-A- 5 857 346**

• **E. LEPINASSE ET B. SPINNER: "Production de froid par couplage de réacteurs solide-gaz I:Analyse des performances de tels systèmes" INTERNATIONAL JOURNAL OF REFRIGERATION, vol. 17, no. 5, 1 juin 1994 (1994-06-01), pages 309-322, XP000444450**
• **E. LEPINASSE ET B. SPINNER: "Production de froid par couplage de réacteurs solide-gaz II: Performance d'un pilote de 1 à 2 kW." INTERNATIONAL JOURNAL OF REFRIGERATION, vol. 17, no. 5, 1 juin 1994 (1994-06-01), pages 323-328, XP000444447**
• **LLOBET J ET AL: "Thermochemical cooling sorption process: experimentation of a new double effect by contact system" INTERNATIONAL JOURNAL OF REFRIGERATION, OXFORD, GB, vol. 23, no. 4, juin 2000 (2000-06), pages 312-329, XP004287387 ISSN: 0140-7007**
• **PONS M ET AL: "Thermodynamic based comparison of sorption systems for cooling and heat pumping - Comparaison des performances thermodynamique des systemes de pompes a chaleur a sorption dans des applications de refroidissement et de chauffage" INTERNATIONAL JOURNAL OF REFRIGERATION, OXFORD, GB, vol. 22, no. 1, janvier 1999 (1999-01), pages 5-17, XP004287274 ISSN: 0140-7007**

**Description**

La présente invention concerne un dispositif thermochimique pour la production de froid à très basse température.

Un système constitué par un dipôle thermochimique mettant en oeuvre deux phénomènes thermochimiques renversables est un moyen connu pour produire du froid. Le dipôle thermochimique comprend un réacteur BT, un réacteur HT et des moyens pour échanger un gaz entre BT et HT. Les deux réacteurs sont le siège de phénomènes thermochimiques renversables choisis tels que, à une pression donnée dans le dipôle, la température d'équilibre dans BT est inférieure à la température d'équilibre dans HT.

Le phénomène renversable dans le réacteur HT met en jeu un sorbant S et un gaz G et peut être :

- une adsorption renversable de G par un solide microporeux S ;
- une réaction chimique renversable entre un solide réactif S et G ;
- une absorption de G par une solution saline ou binaire S selon le schéma

$$\text{"sorbant S" + "G"} \leftrightarrows \text{"sorbant S+G"}.$$

Le phénomène renversable dans le réacteur BT met en jeu le même gaz G. Il peut être un changement de phase liquide /gaz du gaz G ou une adsorption renversable de G par un solide microporeux $S^1$, ou une réaction chimique renversable entre un solide réactif $S^1$ et de G, ou une absorption de G par un solution S1, le sorbant S1 étant différent de S. L'étape de production de froid du dispositif correspond à l'étape de synthèse dans HT

$$\text{"sorbant S" + "G"} \rightarrow \text{"sorbant S+G"}.$$

L'étape de régénération correspond à l'étape de décomposition dans HT

$$\text{"sorbant S+G"} \rightarrow \text{"sorbant S" + "G"}.$$

La production de froid à une température $T_F$ dans un dipôle (BT,HT) à partir d'une source de chaleur à la température $T_c$ et d'un puits thermique à la température To, implique que le phénomène thermochimique dans BT et le phénomène thermochimique dans HT sont tels que :

- au cours de l'étape de production de froid par le dipôle, la consommation exothermique de gaz dans HT a lieu à une température proche de et supérieure à To, qui créé dans le dipôle une pression telle que la température d'équilibre dans le réacteur BT est proche de et inférieure à $T_F$.
- au cours de l'étape de régénération du dipôle, la libération endothermique de gaz dans HT est effectuée à la température Tc qui crée dans le dipôle une pression telle que la température à laquelle s'effectue la consommation exothermique de gaz dans BT est proche de et supérieure à To.

Les phénomènes thermochimiques actuellement utilisés permettent de produire du froid à une température négative dans BT, mais ils ne répondent pas aux critères ci-dessus dans l'objectif de produire du froid à très basse température ($T_F$ typiquement de -20°C à -40°C) pour des applications de congélation et de conservation longue durée de denrées à partir d'une source de chaleur dont le potentiel thermique est de l'ordre de 60 à 80°C, le puits thermique constitué généralement par le milieu ambiant étant à une température To de l'ordre de 10°C à 25°C. Soit ces phénomènes nécessitent lors de la régénération une température Tc nettement supérieure à 70°C pour fonctionner avec un puits thermique à la température ambiante To, soit ils nécessitent un puits thermique à une température inférieure à To si l'on utilise une source de chaleur à Tc = 60-80°C.

Par exemple, pour produire du froid à -30°C en utilisant une source chaude à 70°C, si BT est le siège d'un changement de phase L/G d'ammoniac $NH_3$, et HT est le siège d'une sorption chimique de $NH_3$ par un solide réactif S : si S est $BaCl_2$, il faudrait un puits thermique à 0°C pour le réacteur BT lors de l'étape de production de froid, alors que si S est $CaCl_2$, il faudrait un puits thermique à -5°C, c'est-à-dire à une température très inférieure à To, lors de l'étape de régénération.

L'énergie solaire ou l'énergie géothermique sont des sources de chaleur intéressantes, mais elles fournissent de la chaleur à bas niveau de température qui n'est en général pas supérieure à 60-70°C si l'on utilise une technologie de captation peu coûteuse, comme par exemple des capteurs plans classiquement utilisés pour la production d'eau chaude sanitaire. L'utilisation de ces types d'énergie ne permet par conséquent pas d'atteindre le but visé.

Les inventeurs ont maintenant trouvé qu'il était possible de produire du froid à une température Tf inférieure à -20°C à partir d'une source de chaleur disponible à une température Th entre 60 et 80°C et d'un puits thermique à la température ambiante To variant de 10°C à 25°C, en associant deux dipôles Da et Db : le dipôle Db étant régénérable avec une source de chaleur disponible à la température Th et un puits thermique à la température ambiante To, mais nécessitant un puits thermique à une température inférieure à To pour produire du froid à la température souhaitée Tf; le dipôle Da étant régénérable avec une source de chaleur disponible à la température Th et un puits thermique à la température ambiante To.

Le but de la présente invention est par conséquent de fournir un procédé et un dispositif pour la production de froid à une température Tf inférieure à -20°C, à partir d'une source de chaleur disponible à une température Th de l'ordre de 60-80°C et un puits thermique à la température ambiante To de l'ordre de 10°C à 25°C.

Le dispositif pour la production de froid selon la présente invention comprend un dipôle Db producteur de froid et un dipôle auxiliaire Da, et il est caractérisé en ce que :

- Da comprend un évaporateur/condenseur ECa et un réacteur Ra reliés par un conduit permettant le passage de gaz, et Db comprend un évaporateur/condenseur ECb et un réacteur Rb relié par un conduit permettant le passage de gaz
- ECa contient un gaz Ga et Ra contient un sorbant Sa capable de former un phénomène renversable avec Ga, et ECb contient un gaz Gb et Rb contient un sorbant Sb capable de former un phénomène renversable avec Gb ; les gaz et les solides étant choisis de manière que, à une pression donnée, les températures d'équilibre des phénomènes thermochimiques dans les réacteurs et les évaporateurs/condenseurs sont telles que $T(ECb) \leq T(ECa) < T(Rb) < T(Ra)$ lors de l'étape de production de froid ;
- les processus thermochimiques mis en oeuvre dans le dipôle Db sont tels que ce dipôle peut être régénéré à partir d'une source de chaleur à la température Th et un puits thermique à To, et produire du froid à la température Tf avec un puits thermique à une température inférieure à la température ambiante To ;
- les phénomènes thermochimiques dans le dipôle Da sont tels que ce dipôle peut être régénéré à partir d'une source de chaleur à la température Th et un puits thermique à la température To ;
- Les dipôles sont munis de moyens qui permettent de coupler par voie thermique ECa et Rb lors de l'étape de production de froid.

Dans la suite du texte, l'expression "les éléments" d'un dipôle sera utilisée pour désigner simultanément le réacteur et l'évaporateur/condenseur du dipôle.

Comme exemple de phénomènes thermochimiques utiles dans la présente invention, on peut citer le changement de phase L/G de l'ammoniac ($NH_3$), de la méthylamine ($NH_2CH_3$) ou de $H_2O$ dans les évaporateurs/ condenseurs. Pour les réacteurs, on peut citer :

- une sorption chimique renversable de $NH_3$ par $CaCl_2$, par $BaCl_2$, par $PbBr_2$ ou par $NH_4Br$ ou de $NH_2CH_3$ par $CaCl_2$ ;
- une adsorption d'eau par la zéolithe ou un silicagel ;
- l'adsorption de méthanol (MeOH) ou d'ammoniac dans du charbon actif ;
- l'absorption de $NH_3$ dans une solution liquide d'ammoniaque ($NH_3$, $H_2O$).

La liaison thermique entre ECa et Rb peut être réalisée par exemple par une boucle de fluide caloporteur, par un caloduc ou par un contact direct entre les réacteurs ECa et Rb.

Dans une forme préférée du dispositif de l'invention, chacun des éléments EC est constitué par un ensemble comprenant un évaporateur E et un condenseur C reliés entre eux et avec le réacteur du même dipôle par des conduits munis de vannes permettant le passage de gaz ou de liquide.

Le procédé de production de froid à la température Tf à partir d'une source de chaleur à la température Th et un puits thermique à la température ambiante To consiste à faire fonctionner le dispositif selon l'invention à partir d'un état initial dans lequel les dipôles Da et Db sont à régénérer (c'est-à-dire que les sorbants se trouvent dans les réacteurs Ra et Rb respectivement sous la forme "Sa+Ga" et "Sb+Gb"), les deux éléments d'un dipôle donné étant isolés l'un de l'autre, ledit procédé comprenant une série de cycles successifs constitués par une étape de régénération et une étape de production de froid :

- au début de la 1ère étape, qui est l'étape de régénération du dispositif, on met les deux éléments de chacun des dipôles en communication et l'on apporte de la chaleur à la température Th à chacun des réacteurs Ra et Rb pour les réactions de décomposition dans Ra et Rb, le gaz Ga et le gaz Gb libérés étant transférés respectivement vers les évaporateurs/condenseurs ECa et ECb dans lesquels ils se condensent, la chaleur de condensation étant évacuée dans le puits thermique à To ;
- au cours de la 2ème étape, qui est l'étape de production de froid, on met en communication Rb et ECb, ce qui provoque la phase d'évaporation endothermique spontanée dans ECb (productrice de froid) qui libère Gb sous forme de gaz, ledit gaz passant dans le réacteur Rb dans lequel se produit l'absorption exothermique de Gb par le sorbant Sb ; la chaleur libérée dans Rb est transférée vers ECa pour provoquer la libération du gaz Ga qui passe dans Ra pour être absorbé par le sorbant Sa de manière exothermique, la chaleur libérée dans Ra étant évacuée vers l'environnement à To.

Dans ce procédé, les dipôles Da et Db fonctionnent en phase.

Les différentes étapes peuvent être effectuées en continu ou à la demande. A la fin de l'étape de régénération, il suffit d'isoler les élément d'un même dipôle l'un de l'autre, pour maintenir le dispositif à l'état régénéré. Pour produire du froid, il suffira de mettre les éléments de chaque dipôle en communication. La régénération du dispositif est effectuée soit immédiatement à la fin d'une étape de production, soit ultérieurement.

Le procédé peut être mis en oeuvre de manière permanente si la chaleur de chaleur est disponible à la température Th de manière permanente, par exemple s'il s'agit d'énergie géothermique. Le fonctionnement sera discontinu si la source de chaleur n'est pas permanente, par exemple s'il s'agit d'énergie solaire dont la disponibilité varie au cours d'une journée.

Dans un premier mode de réalisation, les phénomènes thermochimiques sont choisis tels que T(ECb) < T(ECa) < T(Rb) < T(Ra) dans la phase de production de froid. Dans ce cas, Ga et Gb sont différents.

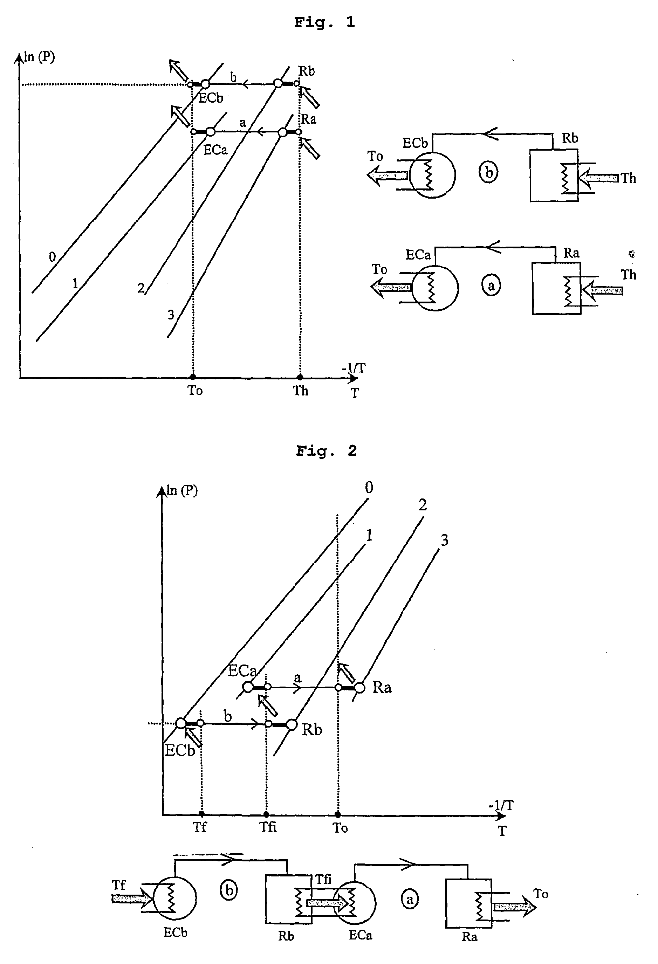

Le procédé de production de froid selon le premier mode de réalisation est illustré sur les figures 1 et 2, qui représentent, dans le diagramme de Clapeyron, les positions thermodynamiques des deux dipôles, respectivement pour l'étape de régénération (Fig. 1), et pour l'étape de production de froid (fig. 2). Les droites 0, 1, 2 et 3 représentent les courbes d'équilibre respectivement pour le changement de phase L/G du gaz Gb, le changement de phase L/G du gaz Ga, le phénomène renversable Gb + SbB ⇌ (Gb,Sb) et le phénomène renversable Ga + Sa ⇌ (Ga, Sa). Sur la partie droite de la figure 1 et la partie inférieure de la figure 2, les flux de gaz sont matérialisés par des flèches simples, et les flux de chaleur par des flèches épaisses.

Au cours de l'étape de régénération, de la chaleur à la température Th est apportée à Rb (point Db de la droite 2) ce qui libère Gb gazeux qui va se condenser dans ECb (point Cb de la droite 0) en libérant de la chaleur à To. En même temps, de la chaleur à la température Th est apportée à Ra (point Da de la droite 3) ce qui libère Ga gazeux qui va se condenser dans ECa (point Ca de la droite 1) en libérant de la chaleur à To.

Au cours de l'étape de production de froid, l'évaporation de Gb dans ECb (point Eb de la droite 0) prélève de la chaleur à Tf dans le milieu à refroidir et produit donc du froid à cette température. Gb gazeux ainsi libéré se transfère par affinité chimique dans Rb pour être absorbé par Sb en libérant de la chaleur à une température inférieure à To (point Sb de la droite 2). La chaleur libérée par l'étape de sorption dans Rb est transférée vers ECa pour produire par évaporation la libération de Ga gazeux (point Ea de la courbe 1), Ga étant transféré dans Ra pour la sorption exothermique dans Ra (point Sa de la courbe 3), libérant de la chaleur dans l'environnement à To.

Dans un deuxième mode de réalisation, les dipôles Da et Db du dispositif selon l'invention mettent en jeu le même gaz de travail G, de sorte que, pour une même pression de travail, T(ECb) = T (ECa) < T(Rb) ≤ T(Ra). Dans ce cas, les deux dipôles contiennent le même gaz G.

Selon une première variante de ce second mode de réalisation, les réacteurs Ra et Rb contiennent des sorbants dont les courbes d'équilibre thermodynamique sont proches l'une de l'autre, c'est-à-dire que l'écart observé entre les températures d'équilibre pour une même pression n'excède pas 10°C. Selon une seconde variante particulièrement intéressante du deuxième mode de réalisation, les réacteurs Ra et Rb contiennent le même sorbant S, ce qui correspond à T(ECb) = T (ECa) < T(Rb) = T (Ra) .

Le procédé de ce second mode de réalisation est caractérisé en ce que la seconde étape comprend deux phases : au cours de la première phase, les éléments du dipôle Da sont isolés l'un de l'autre, et l'on met en communication ECb et Rb, qui provoque la libération de Gb dans ECb et la synthèse exothermique dans Rb, la chaleur libérée dans Rb étant transférée vers le réacteur ECa. Lorsque la pression dans ECa est telle qu'elle permet un fonctionnement du dipôle Da avec le puits thermique à la température ambiante To, la deuxième phase commence par mise en communication des éléments du dipôle Da, ce qui provoque une évaporation endo-thermique dans ECa et une sorption exothermique concomitante de Ga dans Ra. Ainsi Rb est refroidi davantage, ce qui permet une production de froid à Tf.

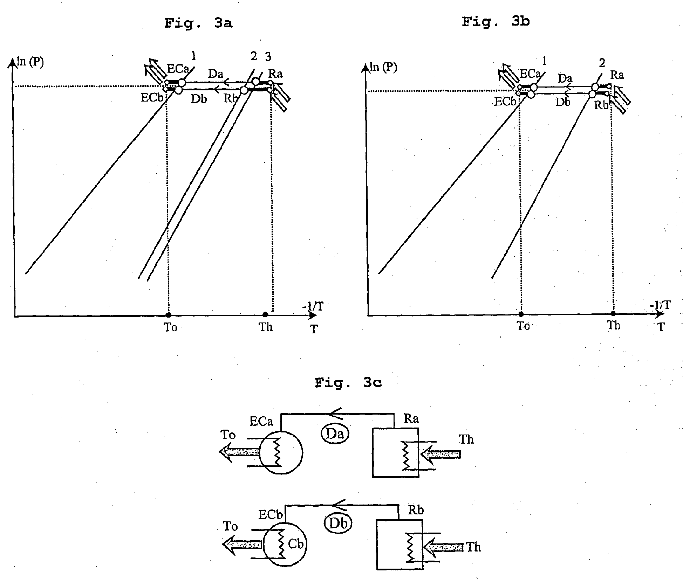

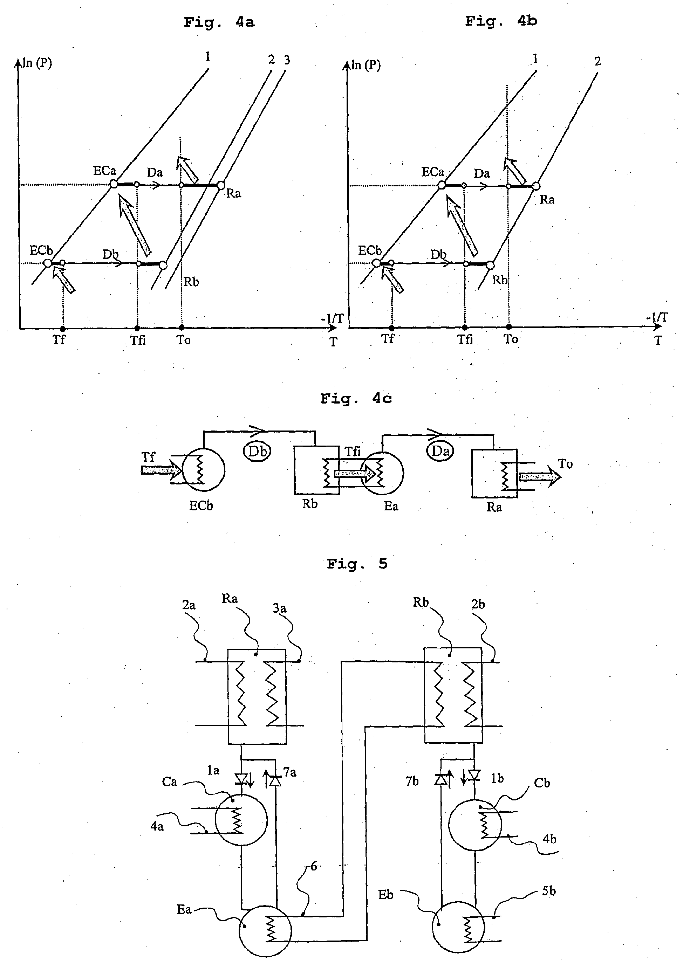

Les diagrammes de Clapeyron sont représentés sur les figures 3 pour la première étape, et sur les figures 4 pour la seconde étape. Les fig. 3a et 4a correspondent à la première variante, les fig. 3b et 4b correspondent à la seconde variante du deuxième mode de mise en oeuvre. Les fig. 3c et 4c représentent les flux de gaz (flèches simples), et les flux thermiques (flèches grasses).

Dans la seconde variante du second mode de réalisation, dans la phase de régénération, les points ECa et ECb du diagramme de Clapeyron sont confondus, de même que les points Ra et Rb. Dans la phase de production de froid, les points ECa et ECb se trouvent sur la même courbe d'équilibre, de même que les points Ra et Rb.

La figure 5 est une représentation schématique d'un dispositif selon la présente invention. Conformément, à la figure 5, le dipôle Da comprend un réacteur Ra, un condenseur Ca et un évaporateur Ea. Ra et Ca sont reliés par un conduit muni d'une vanne 1a, Ca et Ea sont reliés par un conduit simple. Ra et Ea sont reliés par un conduit muni d'une vanne 7a. Ra est muni de moyens de chauffage 2a et de moyens 3a pour éliminer de la chaleur. Ca est muni de moyens 4a pour éliminer de la chaleur. Le dipôle Db comprend un réacteur Rb, un condenseur Cb et un évaporateur Eb. Rb et Cb sont reliés par un conduit muni d'une vanne 1b, Cb et Eb sont reliés par un conduit simple. Rb et Eb sont reliés par un conduit muni d'une vanne 7b Rb est muni de moyens de chauffage 22. Eb est muni de moyens 5b pour prélever de la chaleur sur l'environnement. Ea et Rb sont munis de moyens 6 permettant l'échange de chaleur entre eux.

Les vannes 1a, 1b 7a et 7b peuvent être dans un autre mode de réalisation de simples clapets dont la mise en action (ouverture et fermeture) est uniquement réalisé par le jeu de faibles différences de pression résultant des processus physicochimique mis en oeuvre dans les dipôles. L'utilisation de clapets permet au dispositif d'auto-adapter son fonctionnement au conditions de température imposés par la source de chaleur et le puits thermique sans intervention extérieure. Le sens passant de chaque clapet est représenté sur les figures 5,6, 7, 8 et 9.

Ra est le siège d'une sorption chimique renversable du gaz Ga sur le solide Sa, Ca et Ea étant le siège d'un phénomène de condensation /évaporation du gaz Ga. Rb est le siège d'une sorption chimique renversable du gaz Gb sur le solide Sb, Cb et Eb étant le siège d'un phénomène de condensation /évaporation du gaz Gb.

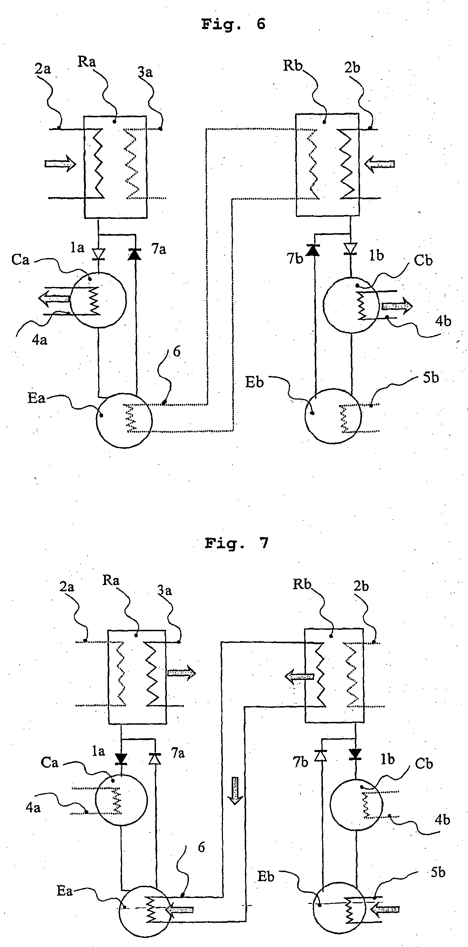

Les parties du dispositif qui sont actives lors de l'étape de régénération sont représentées sur la figure 6. On ouvre les vannes la et 1b, on ferme les vannes 7a et 7b, et les moyens de transfert de chaleur 6 sont inactivés. On apporte de la chaleur à la température Th à Ra et à Rb respectivement par les moyens 2a et 2b, ce qui déclenche la libération de gaz Ga et de gaz Gb qui passent dans les condenseurs respectifs Ca et Cb dans lesquels ils se condensent. La chaleur libérée par les condensations est éliminée par les moyens 4a et 4b, puis les formes liquides de Ga et de Gb passent respectivement dans Ea et Eb.

Les parties du dispositif qui sont actives lors de l'étape de régénération du dispositif sont représentées sur la figure 7. Les vannes 1a et 1B sont fermées, les vannes 7a et 7b sont ouvertes. La mise en communication de Eb avec Rb provoque une évaporation de Gb (produisant du froid à Tf) qui est transféré dans Rb où il est absorbé de manière exothermique par Sb, la chaleur libérée étant transférée via 6 vers Ea pour déclencher l'évaporation de Ga et la synthèse dans Ra. A la fin de cette étape de production de froid, le dispositif doit être régénéré. La régénération peut être immédiate ou différée dans le temps.

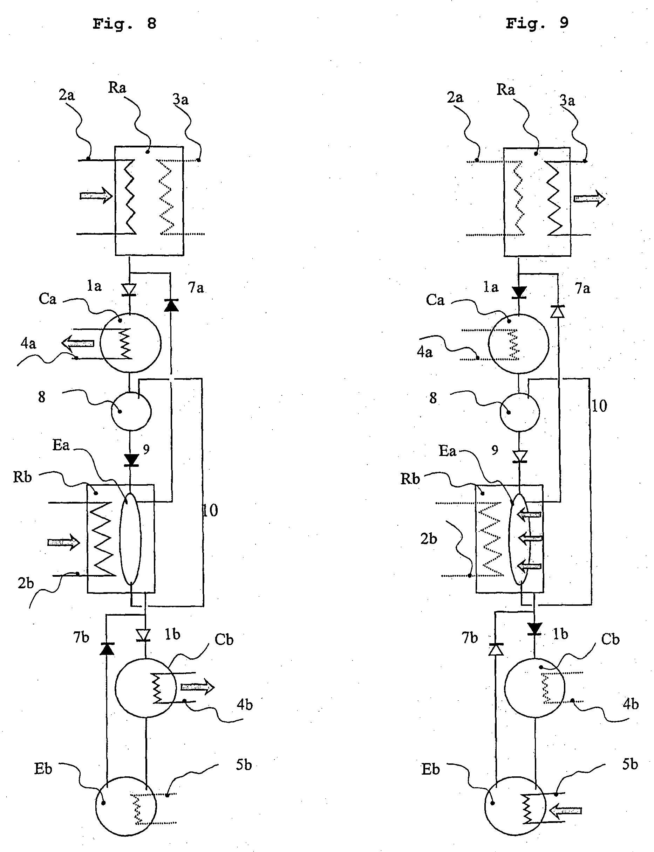

Les figures 8 et 9 représentent représente l'état d'un autre mode de réalisation d'un dispositif selon l'invention, lors de l'étape de régénération (fig. 8) et lors de l'étape de production de froid (fig. 9). Dans ce mode de réalisation également, les évaporateurs/condenseurs EC sont dédoublés chacun en un évaporateur E et un condenseur C. Ici, la liaison thermique entre Rb et ECa est réalisée par un contact direct entre Rb et l'évaporateur Ea de l'élément ECa, de sorte que, lors de l'étape de production de froid dans le dipôle Db à Tf, la chaleur libérée dans Rb est transférée directement dans Ea. Les moyens 6 visibles sur le dispositif de la figure 5 ont ainsi été remplacés par le contact direct entre Rb et Ea. Dans ce mode de réalisation, le dispositif contient en outre un réservoir 8 entre Ca et Ea, ledit réservoir étant relié à Ea d'une part par une vanne 9, et d'autre part par une ligne de purge 10. Ainsi, pendant l'étape de production de froid, l'évaporateur Ea peut être alimenté en Ga liquide par la vanne 9. Pendant l'étape de régénération, l'évaporateur Ea peut être purgé de l'excès de Ga liquide par la ligne de purge 10.

## Exemples

La mise en oeuvre du procédé de l'invention pour la production de froid à Tf selon le premier mode de réalisation, dans lequel les phénomènes thermochimiques sont choisis tels que pour une même pression de travail

$$T(ECb) < T(ECa) < T(Rb) < T(Ra),$$

peut être illustrée par les phénomènes thermochimiques suivants :

| dipôle Da | réacteur Ra |
| | $4\,NH_2CH_3 + (CaCl_2, 2\,NH_2CH_3) \leftrightarrows (CaCl_2, 6\,NH_2CH_3)$ |
| | ECa |
| | changement d'état liquide/gaz de $NH_2CH_3$) |
| dipôle Db | réacteur Rb |
| | $8\,NH_3 + BaCl_2 \leftrightarrows (BaCl_2, 8\,NH_3)$ |
| | ECb |
| | changement d'état liquide/gaz de $NH_3$. |

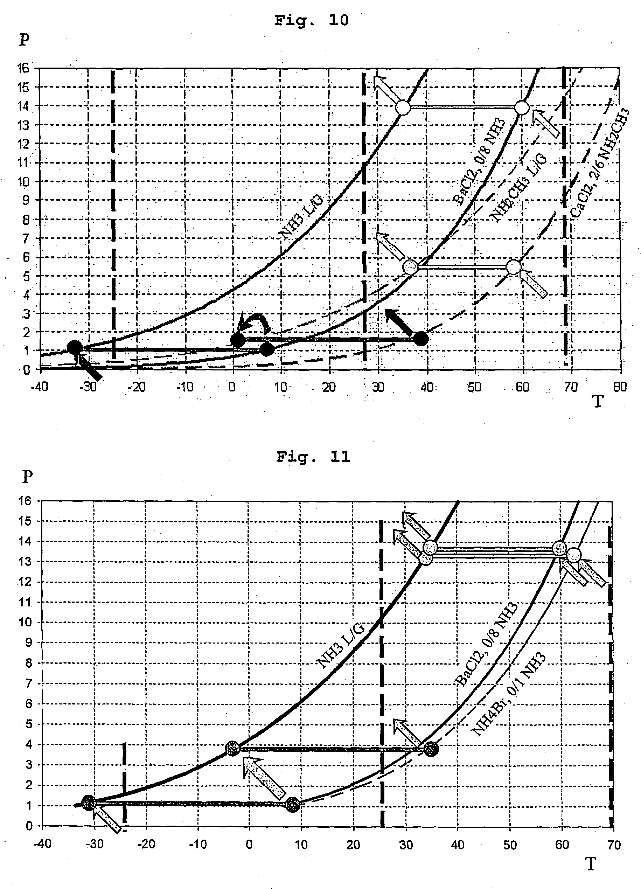

La figure 10 représente les diagrammes de Clapeyron de ce mode de réalisation.

La mise en oeuvre du procédé de l'invention pour la production de froid à Tf selon la 1ère variante du second mode de réalisation, dans lequel les phénomènes thermochimiques sont choisis tels que T(ECb) = T(ECa) < T(Rb) < T(Ra), peut être illustrée par un dispositif dans lequel les deux dipôles sont le siège des phénomènes thermochimiques suivants :

dipôle Da     réacteur Ra
$NH_3 + NH_4Br \leftrightarrows (NH_4Br, NH_3)$
[ce processus pourrait être remplacé par
$2,5\,NH_3 + PbBr_2, 3\,NH_3 \leftrightarrows (PbBr_2, 5,5\,NH_3)$]
ECa
changement d'état liquide/gaz de $NH_3$

dipôle Db     réacteur Rb
$8\,NH_3 + BaCl_2 \leftrightarrows (BaCl_2, 8\,NH_3)$
ECb

changement d'état liquide/gaz de $NH_3$.

La figure 11 représente les diagrammes de Clapeyron de ce mode de réalisation.

La mise en oeuvre du procédé de l'invention pour la production de froid à Tf selon la 2ème variante du second mode de réalisation, dans lequel les phénomènes thermochimiques sont choisis tels que T(ECb) = T(ECa) < T(Rb) = T(Ra), peut être illustrée par un dispositif dans lequel les deux dipôles sont le siège du même phénomène thermochimique suivant :

Réacteurs : $8\,NH_3 + BaCl_2 \leftrightarrows (BaCl_2, 8\,NH_3)$
EC : changement d'état liquide/gaz de $NH_3$.

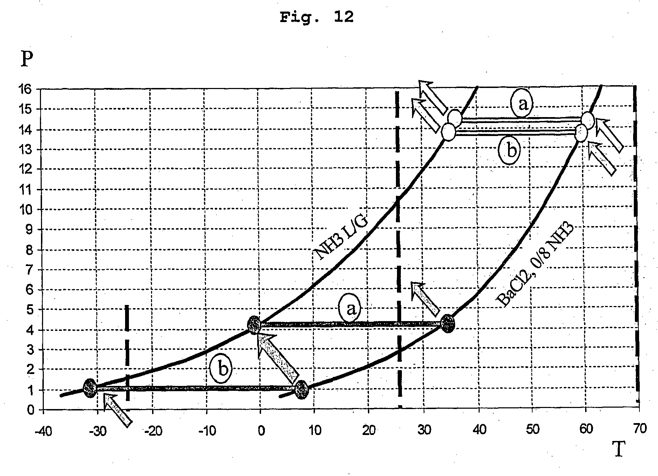

La figure 12 représente les diagrammes de Clapeyron de ce mode de réalisation.

## Revendications

**1.** Dispositif pour la production de froid à une température Tf inférieure à -20°C, à partir d'une source de chaleur disponible à une température Th entre 60-80°C et un puits thermique à la température ambiante To entre 10°C à 25°C, qui comprend un dipôle Db producteur de froid et un dipôle auxiliaire Da, **caractérisé en ce que** :

• Da comprend un évaporateur/condenseur ECa et un réacteur Ra reliés par un conduit permettant le passage de gaz, et Db comprend un évaporateur/condenseur ECb et un réacteur Rb relié par un conduit permettant le passage de gaz
• ECa contient un gaz Ga et Ra contient un sorbant Sa capable de former un phénomène renversable avec Ga, et ECb contient un gaz Gb et Rb contient un sorbant Sb capable de former un phénomène renversable avec Gb ; les gaz et les solides étant choisis de manière que, à une pression donnée, les températures d'équilibre des phénomènes thermochimiques dans les réacteurs et les évaporateurs/condenseurs sont telles que T(ECb) ≤ T(ECa) < T(Rb) < T(Ra) lors de l'étape de production de froid ;
• les processus thermochimiques mis en oeuvre dans le dipôle Db sont tels que ce dipôle peut être régénéré à partir d'une source de chaleur à la température Th et un puits thermique à To, et produire du froid à la température Tf avec un puits thermique à une température inférieure à la température ambiante To ;
• les phénomènes thermochimiques dans le dipôle Da sont tels que ce dipôle peut être régénéré à partir d'une source de chaleur à la température Th et un puits thermique à la température To ;
• les dipôles sont munis de moyens qui permettent de coupler par voie thermique ECa et Rb lors de l'étape de production de froid.

**2.** Dispositif selon la revendication 1, **caractérisé en ce que** les phénomènes thermochimiques dans les réacteurs/ condenseurs sont choisis parmi le changement de phase L/G de l'ammoniac ($NH_3$), le changement de phase L/G de la méthylamine ($NH_2CH_3$) et le changment de phase L/G de $H_2O$.

**3.** Dispositif selon la revendication 1, caractérisé ence que les phénomènes thermochiiques dans les réacteurs sont choisis parmi les sorptions chimiques renversables de $NH_3$ par $CaCl_2$, par $BaCl_2$, par $PbBr_2$ ou par $NH_4Br$ ; la

sorption chimique de $NH_2CH_3$ par $CaCl_2$ ; l'adsorption d'eau par la zéolithe ou un silicagel ; l'adsorption de méthanol (MeOH) ou d'ammoniac dans du charbon actif ; l'absorption de $NH_3$ dans une solution liquide d'ammoniaque ($NH_3$, $H_2O$).

**4.** Dispositif selon la revendication 1, **caractérisé en ce que** chacun des éléments EC est constitué par un ensemble comprenant un évaporateur E et un condenseur C reliés entre eux et avec le réacteur du même dipôle par des conduits munis de vannes permettant le passage de gaz ou de liquide.

**5.** Procédé de production de froid à la température Tf à partir d'une source de chaleur à la température Th et un puits thermique à la température ambiante To consistant à faire fonctionner le dispositif selon la revendication 1 à partir d'un état initial dans lequel les dipôles Da et Db sont à régénérer, c'est-à-dire que les sorbants se trouvent dans les réacteurs Ra et Rb respectivement sous la forme "Sa+Ga" et "Sb+Gb", les deux éléments d'un dipôle donné étant isolés l'un de l'autre, ledit procédé étant **caractérisé en ce qu'**il comprend une série de cycles successifs constitués par une étape de régénération et une étape de production de froid :

- au début de la 1ère étape, qui est l'étape de régénération du dispositif, on met les deux éléments de chacun des dipôles en communication et l'on apporte de la chaleur à la température Th à chacun des réacteurs Ra et Rb pour les réactions de décomposition dans Ra et Rb, le gaz Ga et le gaz Gb libérés étant transférés residectivement vers les évaporateurs/condenseurs ECa et ECb dans lesquels ils se condensent, la chaleur de condensation étant évacuée dans le puits thermique à To ;
- au cours de la 2ᵉᵐᵉ étape, qui est l'étape de production de froid, on met en communication Rb et ECb, ce qui provoque la phase d'évaporation endothermique spontanée dans ECb, productrice de froid, qui libère Gb sous forme de gaz, ledit gaz passant dans le réacteur Rb dans lequel se produit l'absorption exothermique de Gb par le sorbant Sb ; la chaleur libérée dans Rb est transférée vers ECa pour provoquer la libération du gaz Ga qui passe dans Ra pour être absorbé par le sorbant Sa de manière exothermique, la chaleur libérée dans Ra étant évacuée vers l'environnement à To.

**6.** Procédé selon la revendication 5, **caractérisé en ce que** les phénomènes thermochimiques sont choisis tels que Ga et Gb sont différents.

**7.** Procédé selon la revendication 5, **caractérisé en ce que** les dipôles Da et Db du dispositif mettent en jeu le même gaz de travail G.

**8.** Procédé selon la revendication 7, **caractérisé en ce que** la seconde étape comprend deux phases : au cours de la première phase, les éléments du dipôle Da sont isolés l'un de l'autre, et l'on met en communication ECb et Rb, ce qui provoque la libération de Gb dans ECb et la synthèse exothermique dans Rb, la chaleur libérée dans Rb étant transférée vers le réacteur ECa ; lorsque la pression dans ECa est telle qu'elle permet un fonctionnement du dipôle Da avec le puits thermique à la température ambiante To, la deuxième phase commence par mise en communication des éléments du dipôle Da, ce qui provoque une évaporation endothermique dans ECa et une sorption exothermique concomitante de Ga dans Ra.

**9.** Procédé selon la revendication 7, caractérisé ence que les réacteurs Ra et Rb contiennent des sorbants dont les courbes d'équilibre thermodynamique sont proches l'une de l'autre, c'est-à-dire que l'écart observé entre les températures d'équilibre pour une même pression n'excède pas 10°C.

**10.** Procédé selon la revendication 7, **caractérisé en ce que** les réacteurs Ra et Rb contiennent le même sorbant S.

## Patentansprüche

**1.** Vorrichtung für die Produktion von Kälte mit einer Temperatur Tf unter - 20 °C ab einer Wärmequelle, die mit einer Temperatur Th zwischen 60-80 °C verfügbar ist, und einer Wärmesenke mit Umgebungstemperatur To zwischen 10°C bis 25 °C, die einen kälteproduzierenden Dipol Db und eine Hilfsdipol Da umfasst, **dadurch gekennzeichnet, dass**:

• Da einen Verdampfer/Kondensator ECa und einen Reaktor Ra umfasst, die anhand einer Leitung verbunden sind, die den Gasdurchgang erlaubt, und Db einen Verdampfer/Kondensator ECb und einen Reaktor Rb umfasst, der anhand einer Leitung verbunden ist, die den Gasdurchgang erlaubt,

• ECa ein Gas Ga enthält und Ra ein Sorbens Sa enthält, das imstande ist, mit Ga ein umkehrbares Phänomen zu bilden, und ECb ein Gas Gb enthält und Rb ein Sorbens Sb enthält, das imstande ist, mit Gb ein umkehrbares Phänomen zu bilden; wobei die Gase und die Festkörper derart ausgewählt sind, dass bei einem bestimmten Druck die Gleichgewichtstemperaturen der thermochemischen Phänomene in den Reaktoren und den Verdampfern/Kondensatoren derart sind, dass beim Kälteproduktionsschritt $T(ECb) \leq T(ECa) < T(Rb) < T(Ra)$ sind,
• die im Dipol Db umgesetzten thermochemischen Prozesse derart sind, dass dieser Dipol ab einer Wärmequelle mit der Temperatur Th und einer Wärmesenke mit To regenerierbar ist und Kälte mit der Temperatur Tf mit einer Wärmesenke mit einer Temperatur unter der Umgebungstemperatur To produzieren kann,
• die thermochemischen Phänomene im Dipol Da derart sind, dass dieser Dipol ab einer Wärmequelle mit der Temperatur Th und einer Wärmesenke mit der Temperatur To regenerierbar ist,
• die Dipole mit Mitteln ausgestattet sind, die erlauben, ECa und Rb beim Kälteproduktionsschritt auf thermischem Weg zu koppeln.

2. Vorrichtung nach Anspruch 1, **dadurch gekennzeichnet, dass** die thermochemischen Phänomene in den Reaktoren/Kondensatoren aus dem F/G-Phasenwechsel des Ammoniaks ($NH_3$), dem F/G-Phasenwechsel des Methylamins ($NH_2CH_3$) und dem F/G-Phasenwechsel von $H_2O$ ausgewählt sind.

3. Vorrichtung nach Anspruch 1, **dadurch gekennzeichnet, dass** die thermochemischen Phänomene in den Reaktoren aus den umkehrbaren chemischen Sorptionen von $NH_3$ durch $CaCl_2$, durch $BaCl_2$, durch $PbBr_2$ oder durch $NH_4Br$; der chemischen Sorption von $NH_2CH_3$ durch $CaCl_2$; der Wasseradsorption durch Zeolith oder ein Kieselsäuregel; der Adsorption von Methanol (MeOH) oder Ammoniak in Aktivkohle; der Absorption von $NH_3$ in einer flüssigen Ammoniaklösung ($NH_3$, $H_2O$) ausgewählt sind.

4. Vorrichtung nach Anspruch 1, **dadurch gekennzeichnet, dass** jedes der Elemente EC von einer Einheit gebildet ist, die einen Verdampfer E und einen Kondensator C umfasst, die untereinander und mit dem Reaktor desselben Dipols anhand von Leitungen, die mit Ventilen ausgestattet sind, die den Durchgang von Gas oder von Flüssigkeit erlauben, verbunden sind.

5. Verfahren für die Produktion von Kälte mit einer Temperatur Tf ab einer Wärmequelle mit der Temperatur Th und einer Wärmesenke mit Umgebungstemperatur To, das darin besteht, die Vorrichtung nach Anspruch 1 ab einem Ausgangszustand, in welchem die Dipole Da und Db zu regenerieren sind, das heißt, dass sich die Sorbentien in den Reaktoren Ra und Rb jeweils in der Form "Sa+Ga" und "Sb+Gb" befinden, zu betreiben, wobei die zwei Elemente eines bestimmten Dipols voneinander isoliert sind, wobei das Verfahren **dadurch gekennzeichnet ist, dass** es eine Reihe aufeinanderfolgender Zyklen umfasst, die von einem Regenerationsschritt und einem Kälteproduktionsschritt gebildet sind:

- zu Beginn des ersten Schritts, der der Regenerationsschritt der Vorrichtung ist, werden die zwei Elemente jeder der Dipole in Kommunikation versetzt und es wird Wärme mit der Temperatur Th jedem der Reaktoren Ra und Rb für Zerfallsreaktionen in Ra und Rb zugeführt, wobei die freigesetzten Gase Ga und Gb jeweils zu den Verdampfern/Kondensatoren ECa und ECb weitergeleitet werden, in welchen sie kondensieren, wobei die Kondensationswärme in die Wärmesenke mit To abgeleitet wird,
- beim zweiten Schritt, der der Kälteproduktionsschritt ist, werden Rb und ECb in Kommunikation versetzt, was die spontane endotherme Verdampfungsphase in ECb, Kälteproduktion, hervorruft, die Gb in Form von Gas freisetzt, wobei das Gas in den Reaktor Rb strömt, in welchem die exotherme Absorption von Gb durch das Sorbens Sb erfolgt; wobei die in Rb freigesetzte Wärme zu ECa weitergeleitet wird, um die Freisetzung des Gases Ga zu bewirken, das in Ra strömt, um durch das Sorbens Sa exotherm absorbiert zu werden, wobei die in Ra freigesetzte Wärme in die Umwelt mit To abgeleitet wird.

6. Verfahren nach Anspruch 5, **dadurch gekennzeichnet, dass** die thermochemischen Phänomene derart ausgewählt sind, dass Ga und Gb unterschiedlich sind.

7. Verfahren nach Anspruch 5, **dadurch gekennzeichnet, dass** die Dipole Da und Db der Vorrichtung dasselbe Arbeitsgas G verwenden.

8. Verfahren nach Anspruch 7, **dadurch gekennzeichnet, dass** der zweite Schritt zwei Phasen umfasst: während der ersten Phase werden die Elemente des Dipols Da voneinander isoliert, und ECb und Rb werden in Kommunikation versetzt, was die Freisetzung von Gb in ECb und die exotherme Synthese in Rb hervorruft, wobei die in Rb freigesetzte Wärme zum Reaktor ECa weitergeleitet wird; wenn der Druck in ECa derart ist, dass er einen Betrieb des Dipols Da mit der Wärmesenke mit Umgebungstemperatur To erlaubt, beginnt die zweite Phase durch Inkommunikationversetzen der Elemente des Dipols Da, was eine endotherme Verdunstung in ECa hervorruft und eine begleitende exotherme Sorption von Ga in Ra.

9. Verfahren nach Anspruch 7, **dadurch gekennzeichnet, dass** die Reaktoren Ra und Rb Sorbentien enthalten, deren thermodynamische Gleichgewichtskurven einander ähnlich sind, das heißt, dass die zwischen den Gleichgewichtstemperaturen beobachtete Differenz für einen gleichen Druck 10°C nicht überschreitet.

10. Verfahren nach Anspruch 7, **dadurch gekennzeichnet, dass** die Reaktoren Ra und Rb dasselbe Sorbens S enthalten.

**Claims**

1. A device to produce cold at a temperature Tf below-20°C from an available heat source at a temperature Th between 60 and 80°C and a heat sink at ambient temperature To between 10 °C and 25°C, which comprises a cold-producing dipole Db and an auxiliary dipole Da, **characterized in that**:

   · Da comprises an evaporator/condenser ECa and a reactor Ra connected via a duct allowing passing of gas, and Db comprises an evaporator/condenser ECb and a reactor Rb connected via a duct allowing the passing of gas;
   · ECa contains a gas Ga and Ra contains a sorbent Sa capable of forming a reversible phenomenon with Ga, and ECb contains a gas Gb and Rb contains a sorbent Sb capable of forming a reversible phenomenon with Gb; the gases and solids being selected so that, at a given pressure, the equilibrium temperatures of the thermochemical phenomena in the reactors and evaporators/condensers are such that T(ECb) ≤ T(ECa) < T(Rb) < T (Ra) at the cold production step;
   · the thermochemical processes occurring in the dipole Db are such that this dipole can be regenerated from a heat source at temperature Th and a heat sink at To, and can produce cold at temperature Tf with a heat sink at a temperature lower than ambient temperature To;
   · the thermochemical phenomena in dipole Da are such that this dipole can be regenerated from a heat source at temperature Th and a heat sink at temperature To;
   · the dipoles are provided with means allowing coupling of ECa and Rb via thermal route at the cold production step.

2. The device according to claim 1, **characterized in that** the thermochemical phenomena in the reactors/condensers are selected from among L/G phase change of ammonia ($NH_3$), L/G phase change of methylamine ($NH_2CH_3$) and L/G phase change of $H_2O$.

3. The device according to claim 1, **characterized in that** the thermochemical phenomena in the reactors are selected from among reversible chemical sorption of $NH_3$ by $CaCl_2$, by $BaCl_2$, by $PbBr_2$ or by $NH_4Br$; the chemical sorption of $NH_2CH_3$ by $CaCl_2$; adsorption of water by zeolite or silica gel; adsorption of methanol (MeOH) or ammonia in activated carbon; absorption of $NH_3$ in a liquid solution of ammonia ($NH_3$, $H_2O$).

4. The device according to claim 1, **characterized in that** each of elements EC is formed of an assembly comprising an evaporator E and a condenser C linked with each other and with the reactor of the same dipole by ducts provided with valves allowing the passing of gas or liquid.

5. A method to produce cold at temperature Tf from a heat source at temperature Th and a heat sink at ambient temperature To, whereby the device according to claim 1 is set in operation from an initial state in which the dipoles Da and Db are to be regenerated, i.e. the sorbents are contained in reactors Ra and Rb respectively in the form of "Sa+Ga" and "Sb+Gb", the two elements of a given dipole being insulated from each other, said method being **characterized in that** it comprises a series of successive cycles composed of a regenerating step and cold production step;

   - at the start of the 1st step, which is the regeneration step of the device, the two elements of each of the dipoles are placed in communication and heat is applied at temperature Th to each of the reactors Ra and Rb for decomposition reactions in Ra and Rb, and the released gases Ga and Gb being respectively transferred towards the evaporators/condensers ECa and ECb wherein they are condensed, the condensation heat being evacuated into the heat sink at To;

- at the second step, which is the cold production step, Rb and ECb are placed in communication thereby inducing the spontaneous endothermal evaporation phase in ECb, producing cold, which releases Gb in gas form, said gas passing through the reactor Rb in which exothermal absorption of Gb occurs by the sorbent Sb; the heat released in Rb is transferred towards ECa to cause release of gas Ga which passes through Ra to be absorbed exothermally by the sorbent Sa, the heat released in Ra being evacuated into the environment at To.

6.  The method according to claim 5, **characterized in that** the thermochemical phenomena are selected such that Ga and Gb are different.

7.  The method according to claim 5, **characterized in that** the dipoles Da and Db of the device use the same operating gas G.

8.  The method according to claim 7, **characterized in that** the second step comprises two phases: at the first phase the elements of dipole Da are insulated from each other and ECb and Rb are placed in communication, thus causing release of Gb in ECb and exothermal synthesis in Rb, the heat released in Rb being transferred towards the reactor ECa; when the pressure in ECa is such that it allows functioning of the dipole Da with the heat sink at ambient temperature To, the second phase is started by placing in communication the elements of dipole Da thereby causing endothermal evaporation in ECa and concomitant exothermal sorption of Ga in Ra.

9.  The method according to claim 7, **characterized in that** the reactors Ra and Rb contain sorbents having thermodynamic equilibrium curves close to one another i.e. the difference observed between the equilibrium temperatures for one same pressure does not exceed 10 °C.

10. The method according to claim 7, **characterized in that** the reactors Ra and Rb contain the same sorbent S.

## Fig. 1

## Fig. 2

**Fig. 3a**

**Fig. 3b**

**Fig. 3c**

Fig. 4a

Fig. 4b

Fig. 4c

Fig. 5

## Fig. 6

## Fig. 7

Fig. 8

Fig. 9

**Fig. 10**

**Fig. 11**

Fig. 12